# EUROPEAN PATENT SPECIFICATION

(11) **EP 4 247 582 B1**
(45) Date of publication and mention of the grant of the patent: **02.04.2025**
(21) Application number: 21815456.5
(22) Date of filing: 17.11.2021
(51) Int. Cl.: B23K 1/005, B23K 26/24, B23K 28/02

(54) **METHOD FOR JOINING STEEL PARTS**
VERFAHREN ZUM VERBINDEN VON STAHLTEILEN
PROCÉDÉ D'ASSEMBLAGE DE PIÈCES EN ACIER

(30) Priority: 17.11.2020 EP 20208140
(43) Date of publication of application: 27.09.2023
(73) Proprietor: Tata Steel IJmuiden B.V., 1951 JZ Velsen-Noord (NL)
(72) Inventor: VAN DER VELDT, Tonny, 1970 CA IJmuiden (NL); AAIJ, Robin Jolien, 1970 CA IJmuiden (NL)
(74) Representative: Group Intellectual Property Services
(86) International application number: PCT/EP2021/082004
(87) International publication number: WO 2022/106478

(56) References cited:
- WO-A1-2016/101064
- DE-A1- 19 643 434
- FR-A1- 2 854 827
- US-A- 3 465 420
- US-A1- 2013 078 099

## Description

### Field of the invention

The present invention relates to a method for joining at least two steel parts and to the use thereof. In a further aspect, the present invention relates to a laser welding and brazing unit for joining at least two steel parts and a joint between the at least two steel parts.

### Background of the invention

Laser brazing is a joining technique that can be used to join steel parts. In laser brazing a laser beam is used to melt a filler wire between two metal parts in order to create a joint between the two parts without melting the metal parts that are being joined. The joining metal parts can be parts that are inside body parts which are not exposed to atmospheric conditions such as precipitation, temperature, pressure or wind or they can be outside parts that are exposed to atmospheric conditions. The visual appearance of laser brazed parts makes them suitable for applications that have exposed parts such as that in automobile industry. In the automobile industry laser brazing is being used in applications such as for joining the roof to the body side panels or to the assembly of a tailgate. Brazing of such structures shows a better finish to the joints compared with joints produced with other existing joining methods.

The performance of the laser brazing method also depends on the type of the coating used on the metal parts. A coating consisting almost entirely of zinc (>99%) is often used. The visual appearance of these galvanized coatings (GI coatings) on steel parts suffers from wavy edges even though the mechanical performance of laser brazed joints in GI coated materials is acceptable. The use of zinc coatings alloyed with magnesium (MZ) for outer body parts and panels is advantageous owing to their improved corrosion resisting performance as well as for improved pressing performance. The visual appearance of laser brazed MZ-coated parts is also excellent and is judged to be better than the visual appearance of laser brazed Gl. However the joint strength of the laser brazed MZ-coated parts may be insufficient due to incomplete adhesion or fusion of the filler material to the steel surface especially in the root of the joint. The incomplete fusion in the root of the joint is also referred to as incomplete wetting. Due to this incomplete fusion, the joint is prone to early failure in tensile strength measurements, which is unacceptable specifically for automobile applications. Change of the settings such as laser power, brazing speed and wire speed have not proven to be able to fully resolve the issue of lack of adhesion of the filler material in the root of the joint. The restricted strength and the failure mode of laser brazed joints is a bottle-neck in the application of MZ-coated material to the outer body panels for automobile applications.

Laser welding is another method used widely to join two metal parts. A laser beam is used to melt the materials of the metal parts that need to be joined. Even though a laser welded joint has a higher strength than a laser brazed joint, a disadvantage during welding is that the structure of the (often thin-walled) base material in the joint changes. This is an unwanted effect for many applications where the base material structure needs to be unchanged. Moreover, the laser welded joints do not give a good visual appearance. This is a problem especially in applications such as in automobile industry where the visual appearance of outside body parts is critical. In such applications often the laser welded parts need to be hidden under a trim for a better visual appearance. This increases the cost of the process as well as increases the complexity of assembling.

Document US3465420A discloses a method in accordance with the preamble of claim 1 and a joined assembly in accordance with the preamble of claim 12.

### Objectives of the invention

It is an object of the present invention to provide a method of joining steel parts with an increased tensile strength.

It is also an object of the invention to provide a method of joining steel parts with improved visual

It is also an object of the invention to provide a method of joining steel parts with improved corrosion performance, pressing performance, tensile strength and visual appearance.

### Description of the invention

The present invention seeks to provide a reliable solution to improve the strength as well as the visual appearance of a joint between steel parts.

According to the invention, a method for joining at least a first steel part to a second steel part is provided as claimed in claim 1.

An article by Mittelstadt on "Two-beam laser brazing of thin sheet steel for automotive industry using Cu-base filler material" at 8th International conference on Photonic Technologies LANE 2014 (Physics Procedia 56, pages 699-708) discloses a two-beam laser brazing for joining two parts. A leading laser beam is used for pre heating the brazing zone and the filler material whereas a trailing laser beam is used for melting the filler material. Unfortunately these joints show poor mechanical strength.

An article by Liqun Li on "Influence of Zn coating on interfacial reactions and mechanical properties during laser welding-brazing of Mg to steel" in Metallurgical and materials transactions A 43, pages 4740-4754 (2012) discloses a laser welding brazing method to join a Mg alloy to a Zn-coated steel. In the method the laser is used to melt the Mg-alloy and laser brazing is used to melt the Zn-layer and filler material to create a single joint. The steel of the Zn-coated steel is not melted in the method because the temperature never exceeds the melting point of steel.

The time between the laser welding step and the laser brazing step is determined by the cooling rate after the welding. The melt pool preferably has solidified before performing the laser brazing. The cooling rate depends on many factors (thickness of the steel parts to be joined, the heat input around the weld, the size of the melt pool, the use of accelerated cooling, etc.). Under typical conditions the melt pool has solidified between about 120 and 200 ms after the end of the laser welding step. About 700 ms after the welding the weld is still at about 500° but the inventors found that the laser brazing step can be effectively executed with a good brazing result, although a good result is also obtained when the time between the welding and the brazing step is significantly longer, e.g. when the welding and laser step is performed in two separate passes. In that case the delay between the two passes can be several seconds or even minutes. In the method according to the invention the laser brazing step is the rate controlling step, Typical welding speeds are 10-30 m/min, whereas a typical brazing speed is between 2 and 10 m/min. If welding and brazing are combined in a single processing head, then the processing speed is limited by the brazing speed. The inventors found that a suitable distance between both laser beams is typically between 5 and 50 mm. A small distance between both laser beams is particularly useful when the brazing contour contains sharp curves.

The laser welding step according to the invention is preferably performed without the use of additional filler material. However, in case the composition of the melt pool needs adjustment (e.g. to avoid hot cracking after welding), or in case of the gap between the steel parts is too wide a filler wire, in most cases a steel filler wire, with a suitable composition may be used. The laser brazing step can be performed in various wire feed rates. A further embodiment of the present invention relates to performing the laser brazing at a lower wire feed rate to avoid thinning of base material at root of the groove.

An additional advantage of the method according to the invention is that after the laser welding step, the steel parts around the weld still have a higher than ambient temperature. This elevated temperature assists the laser brazing step because the wettability of the steel parts for the brazing material increases as a result. The most commonly used brazing wires are CuSi3, CuSi2 and CuAl8.

In an embodiment of the present invention, the first steel part and/or the second steel part comprises a zinc alloy coating. The coating can be an electrogalvanized (EG) coating with a zinc content of at least 99.9 % (all coating percentages are in wt.% unless otherwise indicated) electrolytically applied in a continuous coating process on a suitable prepared steel surface. The coating can be also a hot-dip galvanized (GI) coating applied in a continuous process by passing the sheet steel through a molten bath with a zinc content of at least 99 %. The coating can be zinc-iron alloy coating that is generated by immersing the prepared strip in a molten bath containing a zinc content of at least 99 % and a subsequent annealing as a result of which iron diffuses into the zinc layer. The resulting zinc-iron coating has an iron content of normally to 13 % by mass and is referred to as a galvannealed (GA) coating. The coating can also be an aluminium-silicon (AlSi) coating by passing the prepared strip through a molten aluminium bath with a silicon content of 8 to 11 %. The coating can also be a zinc-magnesium (MZ) coating by passing the prepared strip through a molten zinc bath alloyed with magnesium and aluminium. The zinc alloy coating (including the Fe₂Al₅ barrier layer) preferably comprises 0.3-4.0% Mg and 0.3-6.0% Al; optionally at most 0.2% of one or more additional elements; unavoidable impurities; the remainder being zinc. More Preferably the alloying element contents in the coating shall be 1,0 - 2,0 % Magnesium and 1,0 - 3,0 %. Aluminium, optionally at most 0.2% of one or more additional elements, unavoidable impurities and the remainder being zinc. In an even more preferred embodiment the zinc alloy coating comprises at most 1.6% Mg and between 1.6 and 2.5% Al, optionally at most 0.2% of one or more additional elements, unavoidable impurities and the remainder being zinc.

In a preferred embodiment of the invention the coated steel parts to be joined are coated with an MZ-coating. The method according to the invention will provide a strong joint between the steel parts by means of the welding, and a brazing joint with an attractive visual appearance requiring no further aesthetic improvements such as the application of trim on top of the brazing joint. The use of the MZ-coating provides the joined steel parts with good corrosion resistance and improved pressing performance.

In accordance with the invention , the laser welding is performed at the root of a groove between the first steel part and the second steel part. Thus the two steel parts are close together, but they do not necessarily touch each other. The laser welding is selectively performed at the root of the groove to minimise the melting of the base material. It is also possible to use a feed material during the welding step. This is specifically advantageous when the base material comprises angled and bent geometries, especially melting of the base material in the bend radius of corners. By focussing a laser beam to the root of the groove to be joined, only the targeted area of the root can be welded thereby increasing the strength of the welded joint and the welded area. For joining, the at least first steel part and the second steel part can be placed in the same plane or at an angle to each other, depending on the orientation of the welding and brazing system used. In an alternative embodiment of the present invention, laser welding is performed where the first steel part abuts the second steel part.

In the method according to the present invention the at least two steel parts to be joined may have the same (or very similar) chemical composition. This similarity facilitates the laser welding step. However, the steel parts may also have very different chemical compositions and/or mechanical properties. For instance, a highly formable steel part with a relatively simple chemistry and microstructure may need to be joined to a high strength steel part with a complex microstructure and chemistry. The laser welding step can deal with these differences by choosing the proper welding parameters and produce a strong weld, whereas the subsequent laser brazing step provides the weld with a visually attractive and corrosion resistant appearance.

An even further embodiment of the present invention relates to performing the laser welding and the laser brazing with a single laser beam. In such a configuration the method involves (at least) two separate passes: the laser welding is first performed and afterwards with the same laser beam the laser brazing is performed. The power and/or spot size of the laser beam may need to be adjusted in both the steps because the laser beam requires a higher localised energy input to melt the metal in the laser welding step. The laser beam size can be adjusted by adjusting the focal distance of the laser beam with respect to the joint and/or by adjusting the power output of the laser.

In a preferable embodiment the laser welding and laser brazing step is performed directly after each other in a single pass using two optical processing heads each having separate laser sources in series or using a dedicated processing head with a single laser but with a double beam. A further embodiment of the present invention relates to performing the laser welding and the laser brazing with multiple laser beams. A delay can be set in between the two laser beams depending on the settling time required in between the laser welding and laser brazing step.

A further embodiment of the present invention relates to producing multiple laser beams from the same source. Various optical arrangements such as a beam splitter prisms or optical delay lines can be used for this step. In some embodiments the laser beams can be directed from the laser source to the joint using optical fibres. A further embodiment of the present invention relates to providing the laser beams at an angle to the surface of the first steel part or to the second steel part. The laser beam is preferably provided almost perpendicular to the direction of the weld between the steel parts to be joined by welding. During the brazing step the laser beam may not be entirely perpendicular to the workpiece, to avoid any back-reflected laser beam being fed back to the laser. The filler material that is used is so reflective when molten that the reflected laser beam may damage the laser. The larger the deviation from the perpendicularity, the more energy is lost because the laser beam is reflected away from the joint.

In an embodiment the first steel part and the second steel part are automotive parts such as body parts or chassis parts or a combination of body and chassis parts. The present invention in a further aspect relates to a laser welding and brazing unit for joining the at least two steel parts, where the laser welding and brazing unit comprises a laser unit and a welding and brazing unit connected to the laser unit. The welding and brazing unit is arranged to execute the method steps as described by the present invention.

An even further embodiment of the present invention relates to a laser welding and brazing unit where the laser welding and brazing unit comprises multiple laser units. This can be used for performing the welding and the brazing processes in a single step by providing a predetermined time delay in between the two processes. In some cases the predetermined time delay can be a settling time required for settling the welded first joint.

The present invention in a further aspect relates to a joined assembly as defined in claim 12, that comprises at least a first joint and a second joint. The first joint joining at least a first steel part and a second steel part is a weld produced by a laser welding step and the second joint joining the at least first steel part and the second steel part is a joint produced by a laser brazing step. The second joint conceals the first joint. The combined joint comprising the first joint and the second joint can be used to join automotive body or chassis parts. The combined joint provides an improved mechanical strength and an improved visual appearance to the joint that is often demanded in automotive body or chassis parts.

### Examples

The invention will now be further explained by means of the following, non-limiting examples, where samples are produced to create a joint between two steel parts. The dimensions of the samples considered as 90 mm X 500 mm with a bending radius of 2.5 mm. The samples are clamped in a coach joint configuration or in a V-groove configuration. The following materials are used for the example embodiment as provided in table 1.

**Table 1**

| Example | Thickness (mm) | Tensile strength of the base material (MPa) | Material type (VDA239-100 2016) | Coating type and thickness (µm) |
|---|---|---|---|---|
| Invention and Comparison | 0.68 | 356 | HX180BD | MZ 70 |

**Table 2 : Chemical composition of the base material (in wt.%)**

| Example | C [wt.%] | Mn [wt.%] | Si [wt.%] | P [wt.%] | S [wt.%] | Al [wt.%] | Cr [wt.%] | Ni [wt.%] | B ppm | N ppm |
|---|---|---|---|---|---|---|---|---|---|---|
| Inv .& Comp. | 0.003 | 0.13 | 0.003 | 0.010 | 0.006 | 0.043 | 0.021 | 0.017 | 10 | 22 |

The first joint by the laser welding at the root of the V-groove is made using a laser beam from a laser such as diode pumped Nd:YAG laser (Trumpf HL4005D) that is focussed to a spot size of 600 µm. No filler material is used for the laser welding process. Followed by this, the laser brazing is performed using a laser source such as diode pumped Nd:YAG laser. For the laser welding and the laser brazing a Trumpf TLC 1005 gantry system is used. The brazing step is performed using a filler material or filler wire of CuSi3 having 1.6 mm diameter. The laser welding and laser brazing in this example are performed at a power of 4.5 kW. During laser brazing, the laser beam is defocussed by moving the welding head vertically up until a spot size of 3 mm diameter is obtained. By defocussing the laser beam, the intensity of the optical beam in laser brazing step is reduced compared to that in the laser welding step. The welding head is tilted by a small angle such as 8 degrees in the plane of the brazing direction to avoid back reflections of light in the fibre. The quality of the joints was measured using a tensile test and the samples were further examined using microstructure analysis.

The weld at the root of a coach joint is made using a small spot of the laser beam and no filler wire is added. To perform the brazing the laser is defocussed in order to achieve a laser spot with a diameter of 3 mm and a 1.6 mm CuSi3 filler wire is added. The laser power output is the same for the brazing step and the welding step, but the intensity of the laser for the brazing step is decreased by defocusing.

**Table 3: Parameter settings of welding and brazing process.**

| Example | process | Laser power (kW) | | Travel speed (m/min) | | Wire speed (m/min) |
|---|---|---|---|---|---|---|
| | | welding | brazing | welding | brazing | |
| Invention | Welding and brazing | 4.5 | 4.5 | 4.5 | 3.0 | 2.5 |
| Comparison | Brazing only | - | 4.5 | - | 3.0 | 2.0 |
| Comparison | Welding only | 4.5 | - | 4.5 | - | - |

**Table 4: Summary of tensile tests.**

| Examples | Process variant | Test ID | Tensile strength (N) | Sample width (mm) | Fracture mode |
|---|---|---|---|---|---|
| Invention | Double pass | 84 | 10043 | 45.19 | Base material |
| Invention | Double pass | 86 | 8800 | 44.35 | HAZ* weld |
| Invention | Double pass | 88 | 8478 | 45.35 | HAZ weld |
| Comparison | Only braze | 74 | 7269 | 45.23 | braze |
| Comparison | Only braze | 76 | 7410 | 44.61 | braze |
| Comparison | Only braze | 78 | 7612 | 45.31 | braze |
| Comparison | Only weld | 79 | 8391 | 45.23 | HAZ weld |
| Comparison | Only weld | 81 | 8674 | 44.68 | HAZ weld |
| Comparison | Only weld | 83 | 8508 | 44.75 | HAZ weld |

| | | | | | |
|---|---|---|---|---|---|
| *HAZ=Heat Affected Zone. | | | | | |

The samples that comprise only a laser brazed joint show incomplete wetting of the brazing material at the interface with the steel surface in the root of the groove. This incomplete wetting reduces the effective cross section area of the joint and thereby reduces the tensile strength of the laser brazed joint. The incomplete wetting and the resulting reduced joint strength are the main quality concerns of the laser brazed joints in MZ coatings. The effective "wetting length" may vary from one sample to another or even at various locations within a single sample. In addition the sharp tip of fissure present between the braze metal and steel sheet may reduce the fatigue behaviour of the joint. When joining MZ coated material in a brazing-only process, the visual appearance of the joint is of excellent quality but the wetting of the CuSi3 brazing material onto the steel sheet is incomplete in the root of the groove. This reduces the joint strength as provided in the samples having the test IDs 74, 76 and 78.

Similar results are obtainable when joining steel parts coated with other known metallic coatings as described herein before.

The samples having only a first joint which is a welded joint show an almost fused joint in the root of the V-groove as shown by the test IDs 79, 81 and 83. However, the top surface of the weld is smooth and concave. The sheet material just above the joint is thinned which is caused by a too large laser spot which therefore touched the material in the bending radius corners. These samples provide increased tensile strength compared to samples that are only joined by laser brazing. However, the visual appearance of the weld joints is below standard.

On the other hand, the joint according to the present invention comprising a first joint and a second joint provides increased tensile strength as well as shows a smooth brazing seam on top. No pores or spatters were observed and the top surface of the joint is slightly convex. The tensile strength of these joints is significantly higher than the samples that have only the second joint made by the laser brazing alone. By choosing a smaller spot size or by adjusting the focal height of the laser beam in the first process (welding), the risk of touching the material in the bending radius can be reduced and thinning of the base material can be avoided. The method described by the present invention embodiments thus provide a combinational effect from the structural integrity by the first joint resulted by laser welding as well as provide the visual appearance of the second joint.

The embodiments described by the present invention are not limiting to a first joint and a second joint but can be also made by a plurality of joints comprising one or more laser welded joints and/or one or more laser brazed joints.

### Brief description of drawings

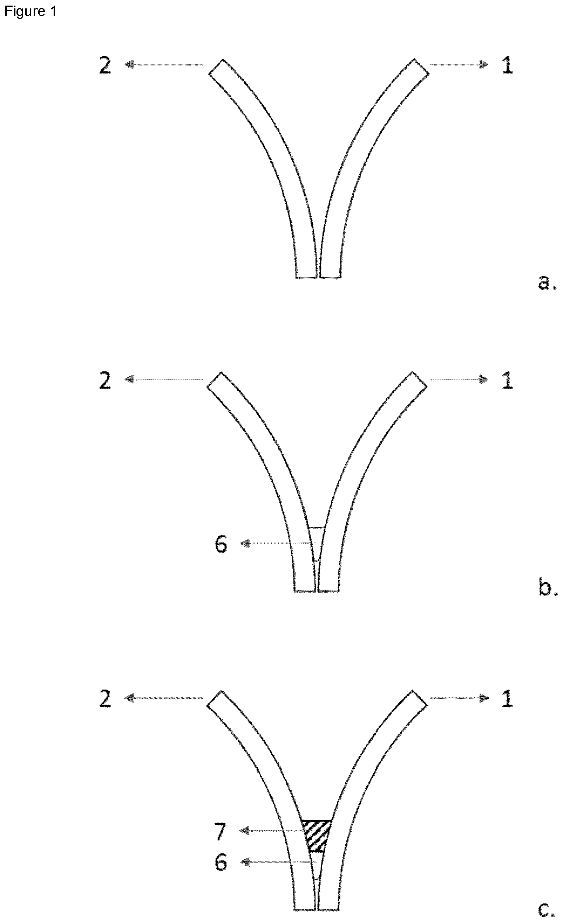

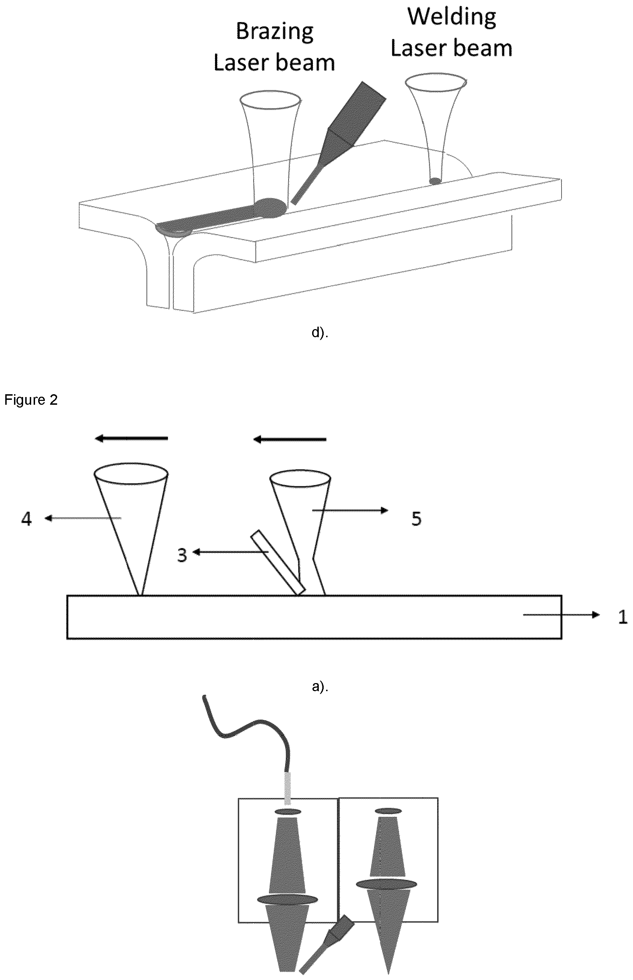

The present invention will now be explained by means of the following, non-limiting figures. Fig. 1 a-c shows a schematic two-dimensional cross-sectional view of two steel parts according to an embodiment of the present invention. In this embodiment the first steel part 1 and the second steel part 2 are of similar geometry arranged in a 'V grove configuration' with respect to its bending radius. The example embodiment is not restrictive to any specific geometry and can be applied to any steel parts having different geometries. As shown in Fig. 1, V groove configuration can be with two steel parts where both the steel parts are with a bended radius. The V groove configuration can also comprise of two steel parts where one steel part is with a bended radius and the other steel part is straight.

As shown in Fig. 1 a , the first steel part 1 and the second steel part 2 are arranged such that at the root of the groove there is minimal or zero gap (abutting parts) between them. In the first step, the root of the V groove is welded together to create a first joint 6 as shown in Fig. 1 b. To obtain this first joint 6, a laser beam of sufficient power 9 such as 4.5 kW is focussed to the root of the groove. The laser welding is performed at a welding temperature that is higher than the melting points of the first steel part 1 and the second steel part 2 so that both the first steel part 1 and the second steel part 2 melt together to form a first joint 6. In the second step laser brazing is performed on top of the first joint 6 to create a second joint 7 to cover the first joint 6. The material of the second joint 7 is the material of the filler material 3 used and it is of a different material than the material of the first joint 6. Usually the first joint 6 is stronger than the second joint 7 as the strength of the second joint 7 is limited by the strength of the filler material 3 used. On the other hand the first joint 6 is made of the base material itself and typically has the strength attributed by the material. Thus, the first joint 6 ensures that the joint has sufficient strength whereas the second joint 7 ensures that the brazing seam on top of the first joint 6 provides a good visual appearance and a proper filling of the material at the joint. As shown in Fig. 1 c, the second joint 7 is on top of the first joint 6 and it fully covers the first joint 6. The combination of the first joint 6 and second joint 7 provides a proper filling of the root of the groove without leaving any unfilled gap in between them. The total strength of the joint will be a combination of the strength provided by the first joint 6 and the second joint 7. This also attributes an increased strength as well as an improved visual appearance to the joint. Fig. 1 d shows side view of a possible V groove configuration that comprises two steel parts where both the steel parts are with a bended radius.

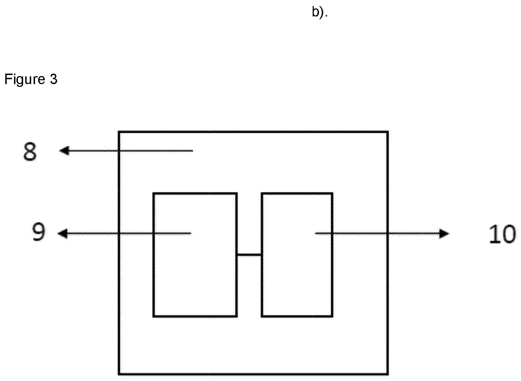

Fig. 2a shows a schematic representation of a configuration to create a joint according to an embodiment of the present invention. A first laser beam 4 is used for providing a first joint 6 by laser welding of first steel part 1 with second steel part 2. The first laser beam 4 is a focussed beam such that the welding can be performed at a welding temperature that is higher than the melting points of the first steel part 1 and the second steel part 2 so that both the first steel part 1 and the second steel part 2 melt together to form a first joint 6. A second laser beam 5 is used for providing a second joint 7 by laser brazing using a filler material 3. The brazing seam is provided on top of the first joint 6 such that the brazing seam fully covers the first joint 6 to create a second joint 7. The laser beam 5 is defocussed such that brazing is performed at a temperature below the lowest of the melting points of the first steel part 1, the second steel part 2 and the first joint 6. This ensures that only the filler material 3 is melted by the second laser beam 5 whereas the first steel part 1, the second steel part 2 and the first joint 6 stays intact without melting. The first laser beam 4 and the second laser beam 5 can be a laser beam from the same laser source that is used in series with a predetermined time delay in between the two different steps. The first laser beam 4 and the second laser beam 5 can be a multiple laser beams that are used in series in a single step. The first laser beam 4 and the second laser beam 5 can be produced from a same laser source or they can be produced from different laser sources. As shown in Fig. 2a, both the first laser beam 4 and the second laser beam 5 can be vertically irradiated to the groove. It is also possible to irradiate the first laser beam 4 and the second laser beam 5 at different angles to the groove. As shown in Fig. 2b, it is also possible to have two heads mounted together where the two lens systems and a wire feeding nozzle are integrated into one unit.

Fig. 3 shows a schematic representation of a laser welding and brazing processing head 8 according to an embodiment of the present invention. The laser welding and brazing unit 8 used for joining at least two steel parts comprises a laser unit 9 and a welding and brazing unit 10 connected to the laser unit 9. The laser welding and brazing unit 8 comprises a single laser unit 9 or a multiple of laser units. The laser unit 8 comprises a laser source or laser sources. The welding step and the brazing step can be performed using the same welding head. The welding step and the brazing step can be done using two separate passes. In such a case, the difference is that the first pass is for the welding step which is in focus and without wire and the second pass is defocussed and with the brazing wire. The welding step and brazing step can be combined in a single head providing the laser beams as shown in Fig. 2. It is also possible to have two heads mounted together.

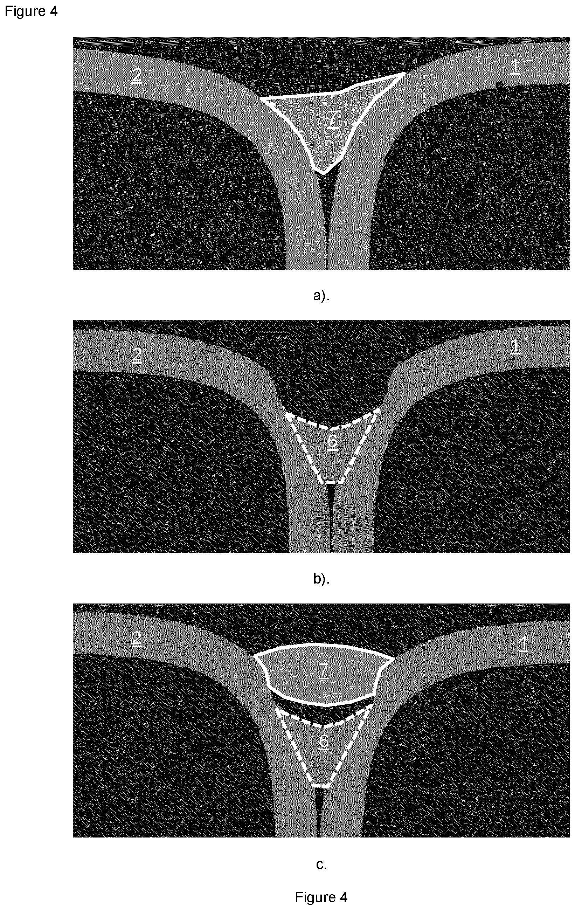

Fig. 4a-c shows images of "brazing only" (a.), "welding only" (b.) and "welding and brazing" (c.). Image b. shows some thinning of the steel parts due to the welding without addition of filler material. This is also visible in Fig. 4 which clearly shows that the brazing (second joint) covers the weld (first joint), but without touching the first joint 6.

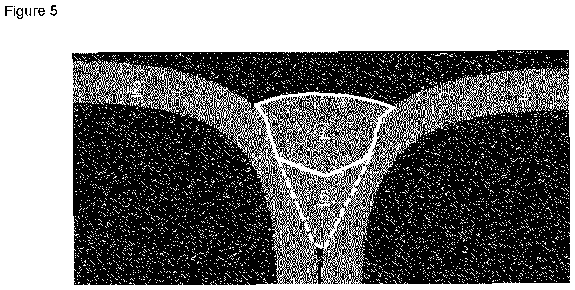

Figure 5 shows a welding and brazing joint where the lower surface of the brazing touches the upper surface of the weld, and there is no gap between the two joints.

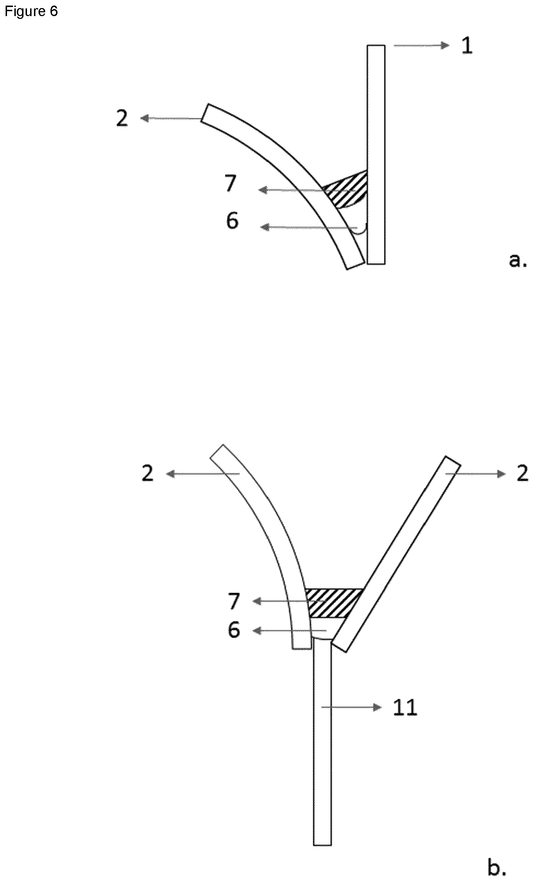

The V groove configuration can also comprise of two steel parts where one steel part is with a bended radius and the other steel part is straight. Figure 6a shows a schematic representation of a joint according to the invention between a straight steel part (1) and a bent steel part (2), and figure 6b shows a schematic representation of a joint according to the invention between three steel parts (1, 2, 11). It should be stressed that the invention is not limited to these particular embodiments and steel part shapes.

In the general context of this invention the second joint is defined as being on top of the first joint, regardless of whether the first and second joints touch each other either partly or completely or not at all. The second joint is on top of the first joint and consequently covers the first joint in the sense that the first joint is no longer visible because of the presence of the second joint on top of the first joint, even though there is no contact between the first and second joint. Note that in Fig.1 c the second joint is on top of the first joint and in full contact.

The present invention has been described above with reference to several exemplary embodiments as shown in the drawings. Modifications and alternative implementations of some parts or elements are possible, and are included in the scope of protection as defined in the appended claims.

## Claims

1. A method for joining at least a first steel part (1) to a second steel part (2) wherein at least the first steel part (1) has a bending radius,· and wherein the at least first steel part (1) and the second steel part (2) are arranged in a V-groove configuration such that at the root of the groove there is a minimal or zero gap, **characterized by** the steps of:
• performing laser welding the first steel part (1) to the second steel part (2) to create a first joint (6); and subsequently performing laser brazing using a filler material (3) to create a second joint (7) between the first steel part (1) and the second steel part (2),
•
• wherein laser welding is performed at the root of a groove between the first steel part (1) and the second steel part (2),
• wherein the laser welding is performed at a welding temperature higher than the melting points of the first steel part (1) and the second steel part (2) to locally melt the first steel part (1) and the second steel part (2) to form a weld,
• wherein the laser brazing is performed at a temperature below the lowest of the melting points of the first steel part (1), the second steel part (2) and the first joint (6) and wherein the second joint (7) conceals the first joint.

2. The method according to claim 1 wherein the second steel part (2) also has a bending radius.

3. The method according to claim 1 or 2, wherein the laser is not perpendicular to the workpiece during laser brazing to avoid any back-reflected laser beam being fed back to the laser.

4. The method according to any one of claims 1 to 3, wherein the first steel part (1) and/or the second steel (2) part comprises a zinc or a zinc alloy coating, preferably wherein the zinc alloy coating comprises 0.3-4.0% Mg and 0.3-6.0% Al; optionally at most 0.2% of one or more additional elements; unavoidable impurities; the remainder being zinc.

5. The method according to any one of claims 1 to 4, wherein the first steel part (1) and/or the second steel (2) part comprises an aluminium-silicon coating comprising 8 to 11 % of silicon.

6. The method according to any one of claims 1 to 5, wherein the laser welding and the laser brazing are performed with a single laser beam (4,5).

7. The method according to any one of claims 1 to 5, wherein the laser welding and the laser brazing are performed with multiple laser beams (4,5).

8. The method according to claim 7, wherein the multiple laser beams (4,5) are produced from the same source.

9. The method according to any one of claims 1 to 6, wherein the method comprises changing the focal length of the laser beam between the laser welding step and the laser brazing step.

10. The method according to any one of claims 1 to 9, wherein the first steel part (1) and the second steel part (2) are automotive body or chassis parts.

11. The method according to any one of claims 1 to 10, wherein the laser welding step is performed without the use of filler material.

12. Joined assembly comprising :
at least first steel part and the second steel part, at least the first steel part (1) having a bending radius, and the at least first steel part (1) and the second steel part (2) being arranged in a V-groove configuration such that at the root of the groove there is a minimal or zero gap; and
a joint between said at least two steel parts; **characterized in that** said joint is obtainable by a method according to any one of the claims 1 to 11 and comprises at least a first joint (6) and a second joint (7), wherein the first joint (6) is a laser welded joint joining at least the first steel part (1) and the second steel part (2) and wherein the second joint (7) is a subsequently laser brazed joint joining the at least first steel part (1) and the second steel part (2), wherein the second joint (7) conceals the first joint (6).

## Patentansprüche

1. Verfahren zum Verbinden von zumindest einem ersten Stahlteil (1) mit einem zweiten Stahlteil (2), wobei zumindest das erste Stahlteil (1) einen Biegeradius aufweist und wobei das zumindest erste Stahlteil (1) und das zweite Stahlteil (2) in einer V-Kerben-Konfiguration so angeordnet sind, dass an der Wurzel der Kerbe ein minimaler oder kein Spalt vorhanden ist, **gekennzeichnet durch** die Schritte:
• Durchführen eines Laserschweißens des ersten Stahlteils (1) mit dem zweiten Stahlteil (2), um eine erste Verbindung (6) zu erzeugen; und anschließend Durchführen eines Laserlötens unter Verwendung eines Füllmaterials (3), um eine zweite Verbindung (7) zwischen dem ersten Stahlteil (1) und dem zweiten Stahlteil (2) zu erzeugen,
• wobei das Laserschweißen an der Wurzel einer Kerbe zwischen dem ersten Stahlteil (1) und dem zweiten Stahlteil (2) durchgeführt wird,
• wobei das Laserschweißen bei einer Schweißtemperatur durchgeführt wird, die höher ist als die Schmelzpunkte des ersten Stahlteils (1) und des zweiten Stahlteils (2), um das erste Stahlteil (1) und das zweite Stahlteil (2) lokal zu schmelzen und eine Schweißnaht zu bilden,
• wobei das Laserlöten bei einer Temperatur unterhalb des niedrigsten der Schmelzpunkte des ersten Stahlteils (1), des zweiten Stahlteils (2) und der ersten Verbindung (6) durchgeführt wird und wobei die zweite Verbindung (7) die erste Verbindung verdeckt.

2. Verfahren nach Anspruch 1, wobei das zweite Stahlteil (2) ebenfalls einen Biegeradius aufweist.

3. Verfahren nach Anspruch 1 oder 2, wobei der Laser beim Laserlöten nicht senkrecht auf das Werkstück gerichtet ist, um zu vermeiden, dass ein zurückreflektierter Laserstrahl auf den Laser zurückgeführt wird.

4. Verfahren nach einem der Ansprüche 1 bis 3, wobei das erste Stahlteil (1) und/oder das zweite Stahlteil (2) eine Beschichtung aus Zink oder einer Zinklegierung umfassen, vorzugsweise wobei die Beschichtung aus Zinklegierung 0,3 bis 4,0 % Mg und 0,3 bis 6,0 % Al; optional höchstens 0,2 % eines oder mehrerer weiterer Elemente; unvermeidbare Verunreinigungen; wobei der Rest Zink ist, umfasst.

5. Verfahren nach einem der Ansprüche 1 bis 4, wobei das erste Stahlteil (1) und/oder das zweite Stahlteil (2) eine Aluminium-Silizium-Beschichtung umfassen, die 8 bis 11 % Silizium umfasst.

6. Verfahren nach einem der Ansprüche 1 bis 5, wobei das Laserschweißen und das Laserlöten mit einem einzigen Laserstrahl (4, 5) durchgeführt werden.

7. Verfahren nach einem der Ansprüche 1 bis 5, wobei das Laserschweißen und das Laserlöten mit mehreren Laserstrahlen (4, 5) durchgeführt werden.

8. Verfahren nach Anspruch 7, wobei die mehreren Laserstrahlen (4, 5) von der gleichen Quelle erzeugt werden.

9. Verfahren nach einem der Ansprüche 1 bis 6, wobei das Verfahren das Ändern der Brennweite des Laserstrahls zwischen dem Laserschweißschritt und dem Laserlötschritt umfasst.

10. Verfahren nach einem der Ansprüche 1 bis 9, wobei das erste Stahlteil (1) und das zweite Stahlteil (2) Karosserie- oder Fahrwerksteile eines Kraftfahrzeugs sind.

11. Verfahren nach einem der Ansprüche 1 bis 10, wobei der Laserschweißschritt ohne Verwendung von Füllmaterial durchgeführt wird.

12. Verbundene Anordnung, umfassend:
zumindest ein erstes Stahlteil und das zweite Stahlteil, wobei zumindest das erste Stahlteil (1) einen Biegeradius aufweist und das zumindest erste Stahlteil (1) und das zweite Stahlteil (2) in einer V-Kerben-Konfiguration so angeordnet sind, dass an der Wurzel der Kerbe ein minimaler oder kein Spalt vorhanden ist; und eine Verbindung zwischen den mindestens zwei Stahlteilen;
**dadurch gekennzeichnet, dass** die Verbindung durch ein Verfahren nach einem der Ansprüche 1 bis 11 erhältlich ist und zumindest eine erste Verbindung (6) und eine zweite Verbindung (7) umfasst, wobei die erste Verbindung (6) eine lasergeschweißte Verbindung ist, die zumindest das erste Stahlteil (1) und das zweite Stahlteil (2) verbindet, und wobei die zweite Verbindung (7) eine anschließend lasergelötete Verbindung ist, die zumindest das erste Stahlteil (1) und das zweite Stahlteil (2) verbindet, wobei die zweite Verbindung (7) die erste Verbindung (6) verdeckt.

## Revendications

1. Procédé permettant l'assemblage d'au moins une première pièce en acier (1) à une seconde pièce en acier (2), dans lequel au moins la première pièce en acier (1) comporte un rayon de courbure, et dans lequel l'au moins une première pièce en acier (1) et la seconde pièce en acier (2) sont disposées dans une configuration de rainure en V de telle sorte qu'à la racine de la rainure il existe un espace minimal ou nul, **caractérisé par** les étapes de :
• réalisation d'un soudage laser de la première pièce en acier (1) à la seconde pièce en acier (2) pour créer un premier joint (6) ; et ensuite réalisation d'un brasage laser en utilisant un matériau d'apport (3) pour créer un second joint (7) entre la première pièce en acier (1) et la seconde pièce en acier (2),
• dans lequel le soudage laser est effectué à la racine d'une rainure entre la première pièce en acier (1) et la seconde pièce en acier (2),
• dans lequel le soudage laser est effectué à une température de soudage supérieure aux points de fusion de la première pièce en acier (1) et de la seconde pièce en acier (2) pour faire fondre localement la première pièce en acier (1) et la seconde pièce en acier (2) pour former une soudure,
• dans lequel le brasage laser est effectué à une température inférieure au plus bas des points de fusion de la première pièce en acier (1), de la seconde pièce en acier (2) et du premier joint (6) et dans lequel le second joint (7) cache le premier joint.

2. Procédé selon la revendication 1, dans lequel la seconde pièce en acier (2) comporte également un rayon de courbure.

3. Procédé selon la revendication 1 ou 2, dans lequel le laser n'est pas perpendiculaire à la pièce pendant le brasage laser pour éviter qu'un faisceau laser rétro-réfléchi ne soit renvoyé vers le laser.

4. Procédé selon l'une quelconque des revendications 1 à 3, dans lequel la première pièce en acier (1) et/ou la seconde pièce en acier (2) comprend un revêtement en zinc ou en alliage de zinc, de préférence dans lequel le revêtement en alliage de zinc comprend 0,3 à 4,0 % de Mg et 0,3 à 6,0 % d'Al ; éventuellement au plus 0,2 % d'un ou plusieurs éléments supplémentaires ; des impuretés inévitables ; le reste étant du zinc.

5. Procédé selon l'une quelconque des revendications 1 à 4, dans lequel la première pièce en acier (1) et/ou la seconde pièce en acier (2) comprend un revêtement en aluminium-silicium comprenant 8 à 11 % de silicium.

6. Procédé selon l'une quelconque des revendications 1 à 5, dans lequel le soudage laser et le brasage laser sont effectués avec un seul faisceau laser (4, 5).

7. Procédé selon l'une quelconque des revendications 1 à 5, dans lequel le soudage laser et le brasage laser sont effectués avec plusieurs faisceaux laser (4, 5).

8. Procédé selon la revendication 7, dans lequel les multiples faisceaux laser (4, 5) sont produits à partir de la même source.

9. Procédé selon l'une quelconque des revendications 1 à 6, dans lequel le procédé comprend le changement de la distance focale du faisceau laser entre l'étape de soudage laser et l'étape de brasage laser.

10. Procédé selon l'une quelconque des revendications 1 à 9, dans lequel la première pièce en acier (1) et la seconde pièce en acier (2) sont des pièces de carrosserie ou de châssis automobile.

11. Procédé selon l'une quelconque des revendications 1 à 10, dans lequel l'étape de soudage laser est effectuée sans utilisation de matériau de remplissage.

12. Ensemble joint, comprenant :
au moins une première pièce en acier et la seconde pièce en acier, au moins la première pièce en acier (1) comportant un rayon de courbure, et l'au moins une première pièce en acier (1) et la seconde pièce en acier (2) étant disposées dans une configuration de rainure en V de telle sorte qu'à la racine de la rainure, il existe un espace minimal ou nul ; et un joint entre lesdites au moins deux pièces en acier ; **caractérisé en ce que** ledit joint peut être obtenu par un procédé selon l'une quelconque des revendications 1 à 11 et comprend au moins un premier joint (6) et un second joint (7), dans lequel le premier joint (6) est un joint soudé au laser j oignant au moins la première pièce en acier (1) et la seconde pièce en acier (2) et dans lequel le second joint (7) est un joint brasé au laser par la suite joignant l'au moins une première pièce en acier (1) et la seconde pièce en acier (2), dans lequel le second joint (7) cache le premier joint (6).
